# EUROPEAN PATENT APPLICATION

(11) **EP 0 524 552 A1**
(43) Date of publication of application: **27.01.1993**
(21) Application number: 92112196.8
(22) Date of filing: 17.07.1992
(51) Int. Cl.: F04B 39/12, F04B 35/04, H02K 5/167, H02K 7/08

(54) **Hermetic motor-compressor unit with a restraining member for the lower part of the drive-shaft**

(30) Priority: 22.07.1991 IT MI912022
(71) Applicant: WHIRLPOOL EUROPE B.V., NL-5507 SK Veldhoven (NL)
(72) Inventor: Albrizio, Francesco, c/o Whirlpool Italia s.r.l., I-21025 Comerio (VA) (IT); Bianchi, Vittorio, c/o Whirlpool Italia s.r.l., I-21025 Comerio (VA) (IT)
(74) Representative: Melio, Jan Dirk

(57) **Abstract**

A hermetic motor-compressor unit (1), particularly for use in a refrigerator or the like, comprising a casing (2) containing a compressor frame (26) for supporting a usual electric motor (8) provided with a stator (9) and a rotor (10), and a cylinder (20) within which a piston (17) moves driven by a drive shaft (13), a compressor head (25) being provided on said cylinder (20).

The upper portion (14) of said shaft (13), ie the portion operationally cooperating with said piston (17), passes through the compressor frame (26) via a suitable aperture (30) in which a bearing or similar member (31) is provided.

The lower portion (33) of the shaft (18) is associated with restraining means (35) which limit the oscillation of the shaft (18) in planes containing its axis (W).

## Description

This invention relates to a hermetic motor-compressor unit, particularly for use in a refrigerator or the like, comprising a casing containing a compressor frame for supporting a usual electric motor provided with a stator and a rotor, and a cylinder within which a piston moves driven by a drive shaft, a compressor head being provided on said cylinder.

The drive shaft drives the piston in known manner via a usual crank mechanism located at its upper end. At this upper end the shaft passes through the compressor frame via a suitable aperture in this latter, in which a bearing or similar mechanical disengagement member is located.

The lower end of the drive shaft is generally free, or simply projects from the electric motor.

This enables the shaft to undergo even relatively large movements along planes containing its axis.

In order to reduce these movements (which could cause obvious mechanical and electrical problems for the motor) as much as possible, the bearing located in the aperture in the compressor frame must embrace the corresponding shaft portion to the maximum extent, in order to properly guide it during its rotation. In this manner the bearing, or a sheath or liner thereof, retains the shaft along a large lateral surface portion thereof and limits the aforesaid movements.

This construction however has various drawbacks.

In this respect, by increasing the bearing dimensions the friction arising during the engagement between the parts (bearing in the compressor frame and shaft) is increased with consequent increase in the energy loss related thereto.

This reflects negatively on the efficiency of the motor-compressor unit.

In addition, the fact that in the known design the connection between the shaft and the bearing in the compressor frame is in projecting form means that a source of noise and mechanical vibration is created during operation, deriving from this contact.

The main object of the present invention is to provide a motor-compressor unit of the stated type in which the drive shaft can move only to a limited extent in planes containing its axis.

A particular object of the invention is to provide a motor-compressor unit of the aforesaid type having a greater efficiency than analogous motor-compressor units of the state of the art.

A further object is to provide a motor-compressor unit in which the friction generated between the shaft and the bearing associated with the compressor frame is much less than in known motor-compressor units.

A further object is to provide a motor-compressor unit which during its operation generates negligible noise, the noise level being less than in the state of the art.

A further object is to provide a motor-compressor unit having a very low starting torque, and in which the motor can be designed and constructed in the most effective manner for the subsequent use of the motor-compressor unit.

A further object is to provide a motor-compressor unit in which the piston moves within the cylinder in a very regular manner.

A further object is to provide a motor-compressor unit of high reliability, of considerable constructional simplicity, and of low cost.

These and further objects which will be apparent to the expert of the art are attained by a motor-compressor unit of the stated type, characterised in that the lower part of the drive shaft cooperates with restraining means arranged to limit the oscillation of the shaft along planes containing its axis, said restraining means being rigid with a part of the motor-compressor unit, advantageously its electric motor.

The present invention will be more apparent from the accompanying drawing, which is provided by way of non-limiting example and in which:

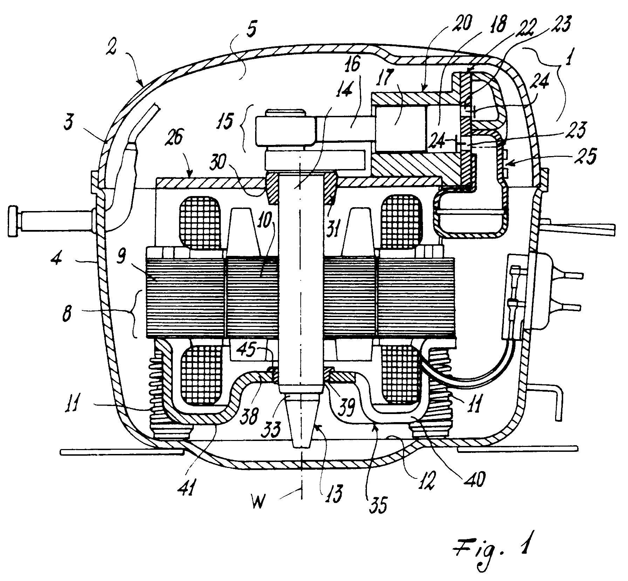

Figure 1 is a cross-section through a motor-compressor unit according to the invention;
Figure 2 is a view from below of a part of the motor-compressor unit of Figure 1;
Figure 3 is a section on the line 3-3 of Figure 2;
Figure 4 is a modified embodiment of a portion of that part shown in Figure 2;
Figures 5, 6 and 7 are schematic representations of modifications of the portion of Figure 4.

With reference to said figures, a motor-compressor unit is indicated by 1 and comprises a casing 2 defined by two shells 3 and 4 fixed together in any known manner.

The cavity 5 defined by said casing 2 contains an electric motor 8 comprising a usual stator 9 and a rotor 10.

The motor rests in any known manner on spring dampers 11, which themselves rest on the bottom 12 of the shell 4.

The motor 8 rotates an output shaft (or drive shaft) 13. A crank mechanism 15 is associated with the upper end 14 of this latter and comprises a connecting rod 16 operating on a usual piston 17 mobile within the cavity 18 of a cylinder 20, to compress a fluid, for example the refrigeration fluid, of a refrigerator in which the motor-compressor unit is used.

At one end of this cavity there is a valve plate 22 provided with passageways 23 on which usual valves 24 are located.

Finally, a compressor head 25 is provided on the valve plate 22. The end 14 of the shaft 13 is associated with a compressor frame 26 to which the cylinder 20 is fixed in known manner.

Alternatively this latter can be formed within said frame 26 by casting.

The frame 26 comprises an aperture 30 containing a usual bearing 31 or similar mechanical disengagement member. The bearing 31 is in contact with the end 14 of the shaft 13.

This latter, at its lower end 33 distant from that associated with the crank mechanism 15, comprises a member 35 which restrains this end in order to limit its movements (and hence the movements of the shaft 13 and of the rotor 9 associated with it, relative to the stator 8) within planes containing the axis W of the shaft 13.

The member 35 for restraining the shaft 13 is advantageously constructed of pressed sheet metal and comprises a central part 38 with a through hole 39, and from which four arms 40 extend.

These latter are bent to form arches 41, their ends 42 being perpendicular to said arms and comprising through holes 43. Each of the holes 43 cooperates with a usual fixing means (not shown, for example a screw) to fix the member 35 (or restraining member) to the motor 8.

A usual bearing is located in the hole 39 to surround said shaft 13.

Advantageously, the bearing is in the form of a barrel-shaped bush 45 of known anti-friction material contained in the hole 39 and comprising an aperture 46 through which the shaft 13 passes.

Specifically (see Figures 2 and 3), with the bush 45 there is associated an elastic ring 47 comprising arms 48 which are bent over to elastically grip the central part 38 of the restraining member 25.

Alternatively (see Figure 4), the bush 45 comprises two parts 50 and 51, the first 50 inserted as an interference fit into the aperture 39 of the member 35, and the second 51 inserted coaxially into a hole 51 in the first.

This second part comprises a through hole 53 through which the shaft 13 passes.

At the hole 52 the first part 50 comprises a wall 55 which is convex (with respect to the hole) and cooperates with the advantageously barrel-shaped second part 51.

Consequently, the cooperation between the wall 55 and the outer surface 56 of the second part 51 allows this latter to undergo small movements relative to the part 50. These small movements are consequent on the movements of the shaft 13 in planes containing its axis W. In this manner these latter are absorbed without effort by the restraining member 35 and without causing any mechanical stressing of the shaft 13, which could damage this latter.

Figures 5, 6 and 7 show further embodiments of the bush 45. In these figures, in which parts corresponding to those of the preceding figures are indicated by the same reference numerals, the bushes 45 are very similar to those of Figures 2 and 3.

Specifically, in said figures (as in Figures 2 and 3), the bush 45 is associated with the elastic ring 47 and is of barrel shape.

Its outer lateral surface 45A is therefore convex. It cooperates with the cylindrical part of the aperture 38, by which small relative movements between the bush and member 35 are possible, with the same advantages as the described bush 45 shown in Figure 4.

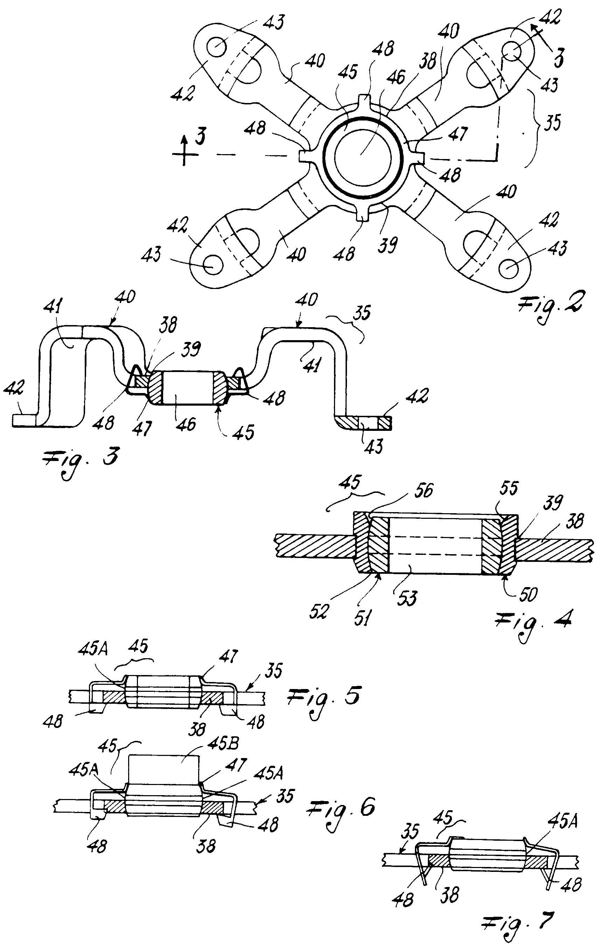

Analogous embodiments are shown in Figures 6 and 7. Specifically, in Figure 6 the bush 45 has a cylindrical part 45B arranged about the corresponding surface of the shaft 13. This "sheathes" the shaft in such a manner as to retain it to a better extent than with the bushes of the other figures.

As can be seen from said Figures 5, 6 and 7, the ring 47 with the elastic arms 48 is located above the member 35. In contrast, in Figures 2 and 3 the ring 47 is located below the member 35.

In Figures 4, 5, 6 and 7 the bush 45 is movable (overall or in part) relative to the member 35. In this manner it follows the movement of the shaft 13 in planes containing the axis W thereof, to suitably position itself and allow self-alignment of the shaft with the member 35.

This also allows self-alignment of the rotor 10 with the stator 9 of the motor 8.

Consequently, the motor is more easily operated under cold conditions than in the known art. Starting torques are therefore much lower than in the known art.

Because of this the motor can be dimensioned must more precisely and more in line with the actual conditions of use.

Because of the presence of the member 35, and possibly the bushes 45, the bearing 31 located between the end 14 of the shaft 13 and the compressor frame 30 is of small size and does not have to cover a large lateral surface of the shaft 13. This means that the friction arising between the contacting parts is reduced, with consequent reduction of the energy dissipation related to this friction.

Because of the presence of the two restraints (frame 26 and member 35), the shaft 13 maintains a substantially stable spatial orientation.

Because of the presence of the self-aligning spherical bush, the axis of the hole through this latter is free to arrange itself parallel to the axis of the hole through the upper bearing 31.

This is particularly true during the insertion of the drive shaft 13. The axis of the hole through the self-aligning spherical bearing is made to coincide with the axis of the hole through the bearing 31 by mechanical centering by correctly positioning the restraining means 35. This particularly applies during that part of the assembly after inserting the drive shaft 13 but before tightening the usual fixing means (for example screws).

This reflects positively on the noise generated during the use of the motor-compressor unit 1, this noise being less than that of motor-compressor units of the state of the art.

Preferred embodiments of the invention have been described.

However further embodiments are possible (such as that for example in which the member 35 is fixed to another part of the motor-compressor unit such as the dampers 11 or the casing 2), these also to be considered as falling within the scope of the present document.

## Claims

1. A hermetic motor-compressor unit, particularly for use in a refrigerator or the like, comprising a casing containing a compressor frame or bracket for supporting a usual electric motor provided with a stator and a rotor, and a cylinder within which a piston moves driven by a drive shaft, a compressor head being provided on said cylinder, said drive shaft driving the piston via a usual crank mechanism located at the upper end of this latter, said shaft passing at this upper end through the compressor frame or bracket via a suitable aperture in this latter, in which a bearing or similar mechanical disengagement member is located, characterised in that the lower part (33) of the drive shaft (13) cooperates with restraining means (35) arranged to limit the oscillation of the shaft (13) along planes containing its axis (W), said restraining means (35) being rigid with a supporting part of the motor-compressor unit (1), advantageously its electric motor (8).

2. A motor-compressor unit as claimed in claim 1, characterised in that the restraining means are a restraining member (35) comprising a part (38) provided with a hole (39) through which the lower part (33) of the drive shaft (13) penetrates, from said holed part (38) there extending arms (40) to be fixed to the supporting part (8) of the motor-compressor unit (1).

3. A motor-compressor unit as claimed in claim 2, characterised in that the arms (40) of the restraining member (35) are provided with bent ends (42) comprising holes (43) to receive usual fixing means for fixing said member to the supporting part (8) of the motor-compressor unit (1).

4. A motor-compressor unit as claimed in claim 3, characterised in that the arms (40) of the restraining member (35) are of undulated shape and define arches (41).

5. A motor-compressor unit as claimed in claim 1, characterised in that the restraining means (35) are of pressed sheet metal construction.

6. A motor-compressor unit as claimed in claim 2, characterised in that the hole (39) through the restraining member (35) contains means (45) for compensating the movement of the drive shaft (13) which are directly connected to this latter and are arranged to compensate the limited movements of said shaft (13) relative to said restraining member (35).

7. A motor-compressor unit as claimed in claim 6, characterised in that the compensating means are a bush (45), advantageously of anti-friction material construction, which is substantially of barrel shape and comprises a through hole (46) through which the drive shaft (13) penetrates.

8. A motor-compressor unit as claimed in claim 7, characterised in that the bush (45) associated with the restraining member (35) cooperates with a fixing member (47) comprising arms (48) arranged to snap-cooperate elastically with said member.

9. A motor-compressor unit as claimed in claim 7, characterised in that the bush (45) comprises two parts (50, 51), a first part (50) associated with the restraining member (35) comprising a through hole (52) through which the barrel-shaped second part (51) is inserted coaxially, the wall (55) of said through hole (52) being convex with respect to said hole and cooperating as an interference fit with the outer wall (56) of the second barrel-shaped part (51).

10. A motor-compressor unit as claimed in claim 7, characterised in that the bush (45) comprises a cylindrical part (45B) arranged to cooperate with the corresponding surface of the lower part (33) of the drive shaft (13).

11. A motor-compressor unit as claimed in claim 2, characterised in that the hole (39) through the restraining member (35) contains self-aligning means (45) for the axis of the hole through the lower bearing (51) which enable the best orientation of the axis of the hole through said lower bearing (51) to be obtained relative to the axis of the hole through the upper bearing (31).

12. A motor-compressor unit as claimed in claim 2, characterised in that the hole (39) through the restraining member (35) contains self-aligning means (45) for the axis of the hole through the lower bearing (51) which eliminate the effect of any lack of parallelism between the two planes, namely the upper and lower, on which the compressor frame (26) is fixed in the usual manner by support feet and on which the member (35) is fixed by its ends respectively.

13. A motor-compressor unit as claimed in claim 2, characterised in that the hole (39) through the restraining member (35) contains self-aligning means (45) for the axis of the hole through the lower bearing (51) which eliminate the influence of any lack of perpendicularity between the plane passing through the fixing feet of the compressor frame (26) and the axis of the hole through the bearing (31), by which the working tolerances can be advantageously reduced with the result that the compressor frame and the bearing (31) can be advantageously constructed of pressed sheet metal either in one piece by deep-drawing the bearing within the compressor frame (35) or in two pieces by fixing the bearing (31) to the compressor frame (35) in any known manner (for example by welding).
